# EUROPEAN PATENT APPLICATION

(11) **EP 4 676 119 A1**
(43) Date of publication of application: **07.01.2026**
(21) Application number: 24777765.9
(22) Date of filing: 15.03.2024
(51) Int. Cl.: H04W 28/08

(54) **SEGMENTATION POINT DETERMINATION METHOD AND APPARATUS**

(30) Priority: 28.03.2023 CN 202310340691
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN); SUN, Fei, Shenzhen, Guangdong 518129 (CN); LOU, Chong, Shenzhen, Guangdong 518129 (CN); CHEN, Weimin, Shenzhen, Guangdong 518129 (CN)
(74) Representative: Gill Jennings & Every LLP
(86) International application number: PCT/CN2024/082016
(87) International publication number: WO 2024/198976

(57) **Abstract**

A method and an apparatus for determining a split point are disclosed. The method includes: obtaining network state information, first power consumption information of a terminal device, and artificial intelligence model attribute information; and determining at least one split point from a plurality of split points based on the network state information, the first power consumption information, and the artificial intelligence model attribute information. According to the foregoing method, a split point is determined based on the network state information, the first power consumption information, the artificial intelligence model attribute information, or other information, so that the determined at least one split point can meet performance indicators such as a transmission rate, channel state information, and power consumption. In this way, a part, obtained through division based on the split point, of the artificial intelligence model can be executed on the terminal device, and another part is executed on an application server, so that an artificial intelligence model obtained through division can better adapt to terminal devices and application servers with different capabilities, and better meet a requirement of an artificial intelligence model computing service.

## Description

### CROSS-REFERENCE TO RELATED APPLICATIONS

This application claims priority to Chinese Patent Application No. 202310340691.9, filed with the China National Intellectual Property Administration on March 28, 2023 and entitled "METHOD AND APPARATUS FOR DETERMINING SPLIT POINT", which is incorporated herein by reference in its entirety.

### TECHNICAL FIELD

This application relates to the field of communication technologies, and, to a method and an apparatus for determining a split point.

### BACKGROUND

A terminal device may capture data (for example, image data or speech data) through sensors such as a camera and a microphone, and then perform perceptual recognition (for example, speech recognition or image recognition) by using an artificial intelligence (artificial intelligence, Al)/machine learning (machine learning, ML) model, to implement an intelligent application. However, high computing power, a large memory, and high power consumption are needed for processing a service with a large amount of data by using the AI/ML model. Computing power, storage, and a battery capacity of the terminal device are limited, and real-time computing of the service with a large amount of data cannot be supported locally. For example, a 3×3 convolutional neural network with four output channels is used as an example. If input is a frame of picture with a resolution of 4096×2160, 4.3 giga (giga, G) multiplications and 4.3 G additions are needed for executing only one layer of model. If the AI/ML model is offloaded to an edge server to enable the edge server to process data by using the AI/ML model and then return processed data to the terminal device, excessively high uplink transmission bandwidth is occupied due to a large amount of data.

In a current 5G system, the AI/ML model and data may be split, and an AI/ML model and data that are obtained through splitting are allocated to different computing nodes for execution, to implement federated learning and distributed learning. For example, the AI/ML model may be split into two parts. The terminal device first executes a first part of the AI/ML model, and the server sends intermediate data output by the first part of the AI/ML model to a server. Then the server executes a second part of the AI/ML model. Finally, the server feeds back an inference result of the AI/ML model to the terminal device.

However, how to determine a split point of the AI/ML model and improve execution efficiency of the AI/ML model is a problem that urgently needs to be resolved.

### SUMMARY

This application provides a method and an apparatus for determining a split point, to resolve a problem of how to determine a split point of an artificial intelligence model and improve execution efficiency of the artificial intelligence model.

According to a first aspect, this application provides a method for determining a split point. The method may be performed by a network device or a module in the network device. The method includes: obtaining network state information, first power consumption information of a terminal device, and artificial intelligence model attribute information, where the network state information indicates at least one of a first transmission rate and first channel state information, the artificial intelligence model attribute information indicates a plurality of split points of an artificial intelligence model, a transmission rate needed at each of the plurality of split points, and power consumption needed at each of the plurality of split points, and the first power consumption information indicates computing power consumption needed by the terminal device to execute the artificial intelligence model to a model that is before each of the plurality of split points; and determining at least one split point from the plurality of split points based on the network state information, the first power consumption information, and the artificial intelligence model attribute information.

According to the foregoing method, a split point is determined based on the network state information, the first power consumption information, the artificial intelligence model attribute information, or other information, so that the determined at least one split point can meet performance indicators such as a transmission rate, channel state information, and power consumption. In this way, a part, obtained through division based on the split point, of the artificial intelligence model can be executed on the terminal device, and another part is executed on an application server, so that an artificial intelligence model obtained through division can better adapt to terminal devices and application servers with different capabilities, and better meet a requirement of an artificial intelligence model computing service, to improve execution efficiency of the artificial intelligence model.

In a possible implementation, each of the at least one split point meets at least one of the following:

A transmission rate needed at the split point is less than or equal to the first transmission rate;
channel state information needed at the split point is less than or equal to the first channel state information; or
power consumption needed at the split point is less than or equal to computing power consumption of executing, by the terminal device, a model located before the split point in the artificial intelligence model.

In the method, if a transmission rate needed at each of the at least one split point may be less than or equal to the first transmission rate, it can be ensured that a requirement of a selected split point for a transmission rate matches a current transmission rate of a network. If channel state information needed at each of the at least one split point may be less than or equal to the first channel state information, it can be ensured that a requirement of a selected split point for channel state information matches current channel state information of the network. If power consumption needed at each of the at least one split point may be less than or equal to computing power consumption of executing, by the terminal device, a model located before the split point in the artificial intelligence model, it can be ensured that a requirement of a selected split point for power consumption matches computing power consumption of executing the artificial intelligence model by the terminal device.

In a possible implementation, the artificial intelligence model attribute information further indicates confidence and accuracy of an output result at each of the plurality of split points, and the artificial intelligence model attribute information further indicates a latency needed at each of the plurality of split points. Each of the at least one split point further meets at least one of the following:

Confidence of an output result at the split point is greater than or equal to first confidence;
accuracy of an output result at the split point is greater than or equal to first accuracy; or
a computing latency needed at the split point is less than or equal to a first latency.

Confidence of an output result at each of the at least one split point may be greater than or equal to the first confidence. This can ensure that confidence of an output result at a selected split point matches the first confidence. If accuracy of an output result at each of the at least one split point may be greater than or equal to the first accuracy, it can be ensured that accuracy of an output result at a selected split point matches the first accuracy. If a computing latency needed at each of the at least one split point may be less than or equal to the first latency, it can be ensured that a requirement of a selected split point for a latency matches the first latency.

In a possible implementation, the method further includes: obtaining first computing power information of the terminal device and second computing power information of an application server, where the first computing power information indicates a computing processing speed of the terminal device, and the second computing power information indicates a computing processing speed of the application server; and determining the first latency based on the network state information, the first computing power information, and the second computing power information.

In a possible implementation, the method further includes: obtaining first confidence information and/or first accuracy information, where the first confidence information indicates the first confidence, and the first accuracy information indicates the first accuracy.

In a possible implementation, the method further includes: sending first indication information to the terminal device and/or the application server, where the first indication information indicates the at least one split point.

In a possible implementation, the first indication information is carried in an edge resource control protocol layer message; or
the first indication information is carried in a radio resource control message; or
the first indication information is carried in media access control control element signaling; or
the first indication information is carried in non-access stratum signaling.

In a possible implementation, the artificial intelligence model attribute information further includes exit point information. The exit point information indicates at least one of the following: a transmission rate needed at each of a plurality of exit points of the artificial intelligence model, channel state information needed at each of the plurality of exit points, or power consumption needed at each of the plurality of exit points. The method further includes: determining at least one exit point from the plurality of exit points based on the network state information, the first power consumption information, and the exit point information.

According to the foregoing method, an exit point is determined based on the network state information, the artificial intelligence model attribute information, or other information, so that the determined at least one exit point can meet performance indicators such as a transmission rate, channel state information, power consumption, and a latency. In this way, when the artificial intelligence model is executed based on a selected exit point, resource consumption needed for executing the artificial intelligence model is reduced, and a requirement of an artificial intelligence model computing service is better met.

In a possible implementation, each of the at least one exit point meets at least one of the following:

A transmission rate needed at the exit point is less than or equal to the first transmission rate;
channel state information needed at the exit point is less than or equal to the first channel state information; or
power consumption needed at the exit point is less than or equal to power consumption of executing a model located before the exit point in the artificial intelligence model.

In a possible implementation, the exit point information further indicates at least one of the following: confidence of an output result at each of the plurality of exit points, accuracy of an output result at each of the plurality of exit points, or a latency needed at each of the plurality of exit points.

Each of the at least one exit point further meets at least one of the following:

Confidence of an output result at the exit point is greater than or equal to second confidence;
accuracy of an output result at the exit point is greater than or equal to second accuracy; or
a computing latency needed at the exit point is less than or equal to a second latency.

In a possible implementation, the method further includes: obtaining first computing power information of the terminal device and second computing power information of an application server, where the first computing power information indicates a computing processing speed of the terminal device, and the second computing power information indicates a computing processing speed of the application server; and determining the second latency based on the network state information, the first computing power information, and the second computing power information.

In a possible implementation, the method further includes: obtaining second confidence information and/or second accuracy information, where the second confidence information indicates the second confidence, and the second accuracy information indicates the second accuracy.

In a possible implementation, the method further includes: sending second indication information to the terminal device and/or the application server, where the second indication information indicates the at least one exit point.

According to a second aspect, this application provides a method for determining a split point. The method may be performed by a terminal device or a module in the terminal device. The method includes: receiving first indication information from a network device, where the first indication information indicates at least one split point of an artificial intelligence model, the at least one split point is determined from the plurality of split points based on network state information, first power consumption information, and artificial intelligence model attribute information, the network state information indicates at least one of a first transmission rate and first channel state information, the artificial intelligence model attribute information indicates a plurality of split points of the artificial intelligence model, a transmission rate needed at each of the plurality of split points, and power consumption needed at each of the plurality of split points, and the first power consumption information indicates power consumption of executing each layer of the artificial intelligence model by the terminal device; executing a first part of model of the artificial intelligence model to obtain a first model output result of the first part of model, where the first part of model is a part located before a first split point in the artificial intelligence model, and the first split point is one of the at least one split point; sending a first data packet to an application server, where the first data packet includes the first model output result and third indication information, and the third indication information indicates the first split point; and receiving a first inference result from the application server, where the first inference result is determined by executing the artificial intelligence model based on the first model output result and the first split point.

According to a third aspect, this application provides a method for determining a split point. The method may be performed by an application server or a module in the application server. The method includes: receiving a first data packet from a terminal device, where the first data packet includes a first model output result and third indication information, and the third indication information indicates a first split point; executing a second part of model of an artificial intelligence model based on the first split point to obtain a first inference result, where a first model output result is used as input data of the second part of model, and the second part of model is a part located after the first split point in the artificial intelligence model; and sending the first inference result to the terminal device.

In a possible implementation, the method further includes: receiving second indication information, where the second indication information indicates at least one exit point; selecting one exit point from the at least one exit point as a first exit point; and during the execution of the second part of model of the artificial intelligence model, ending the execution of the artificial intelligence model at the first exit point.

According to a fourth aspect, this application further provides a communication apparatus. The communication apparatus is capable of implementing any method provided in any one of the first aspect to the third aspect. The communication apparatus may be implemented by hardware, or may be implemented by hardware executing corresponding software. The hardware or the software includes one or more units or modules corresponding to the foregoing functions.

In a possible implementation, the communication apparatus includes a processor. The processor is configured to support the communication apparatus in performing a corresponding function of the network device, the terminal device, or the application server in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a terminal apparatus or another device.

In a possible implementation, the communication apparatus includes corresponding functional modules that are respectively configured to implement the steps in the foregoing methods. The functions may be implemented by hardware, or may be implemented by hardware executing corresponding software. The hardware or the software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in any one of the first aspect to the third aspect. Details are not described herein again.

According to a fifth aspect, a communication apparatus is provided, and includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in any one of the first aspect to the third aspect or any possible implementation of any one of the aspects through a logic circuit or by executing code instructions.

According to a sixth aspect, a communication apparatus is provided, and includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement a functional module of the method in any one of the first aspect to the third aspect or any possible implementation of any one of the aspects through a logic circuit or by executing code instructions.

According to a seventh aspect, a computer-readable storage medium is provided. The computer-readable storage medium stores a computer program or instructions. When the computer program or instructions are executed by a processor, the method in any one of the first aspect to the third aspect or any possible implementation of any one of the aspects is implemented.

According to an eighth aspect, a computer program product storing instructions is provided. When the instructions are run by a processor, the method in any one of the first aspect to the third aspect or any possible implementation of any one of the aspects is implemented.

According to a ninth aspect, a chip is provided. The chip includes a processor, configured to implement the method in any one of the first aspect to the third aspect or any possible implementation of any one of the aspects. Optionally, the chip may further include a memory. The chip may include a chip, or may include a chip and another discrete component.

According to a tenth aspect, a circuit is provided. The circuit is configured to perform the descriptions in the method provided in any one of the first aspect to the third aspect. The circuit may include a chip circuit. Optionally, the circuit may be further coupled to a memory.

According to an eleventh aspect, a communication system is provided, and includes a network device, a terminal device, and an application server.

The network device is configured to implement the method in any one of the first aspect or the possible implementations of the first aspect. The terminal device is configured to implement the method in any one of the second aspect or the possible implementations of the second aspect. The application server is configured to implement the method in any one of the third aspect or the possible implementations of the third aspect.

According to a twelfth aspect, a communication system is provided, and includes: an apparatus (for example, a network device) configured to implement the method in any one of the first aspect or the possible implementations of the first aspect, and an apparatus (for example, an application server) configured to implement the method in any one of the third aspect or the possible implementations of the third aspect.

### BRIEF DESCRIPTION OF DRAWINGS

FIG. 1 is a diagram of a system architecture to which embodiments of this application are applicable;
FIG. 2 is a diagram of a structure of a network device according to an embodiment of this application;
FIG. 3 is a diagram of a structure of a network device according to an embodiment of this application;
FIG. 4 is a diagram of a structure of an AI model according to an embodiment of this application;
FIG. 5 is a diagram of a structure of an AI model according to an embodiment of this application;
FIG. 6 is a schematic flowchart of a method for determining a split point according to an embodiment of this application;
FIG. 7 is a schematic flowchart of a method for executing an artificial intelligence model according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

The following describes embodiments of this application in detail with reference to the accompanying drawings in this specification.

Technical solutions of this application may be applied to various communication systems, for example, a long term evolution (long term evolution, LTE) system, a fifth-generation (5th generation, 5G) mobile communication system, or a next-generation mobile communication system. This is not limited herein. The 5G system may also be referred to as a new radio (new radio, NR) system. This application may be further applied to other communication systems. This is not limited herein.

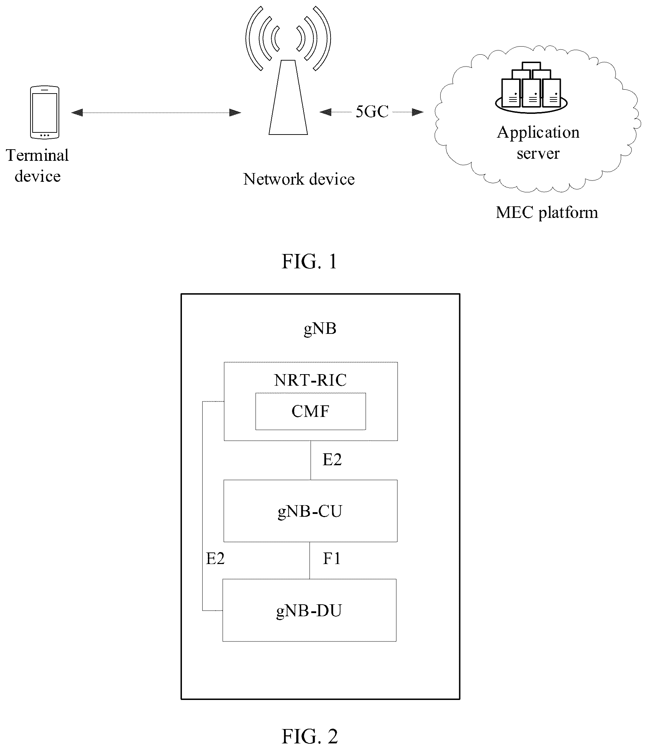

FIG. 1 is a diagram of a system architecture to which embodiments of this application are applicable. The system is a device-edge collaborative AI inference system. The system includes a terminal device, a network device, and a multi-access edge computing (multi-access edge computing, MEC) platform.

The MEC platform is deployed in a data network after a core network user plane function. The MEC platform includes at least one computing node. The computing node may be a device installed and deployed by a device manufacturer, an operator, or a third party. For example, the computing node may be an application server, and the application server may also be referred to as an edge server or another name. The network device and the MEC platform may be connected through a 5G core network (5G core network, 5GC), or may be connected through an LTE network or a future 6G network, provided that a network architecture has communication and computing capabilities.

The system shown in FIG. 1 may further include a computing management function (computing management function, CMF). The CMF may be a functional module in the network device or the 5GC. If the CMF is a functional module in the network device, in an implementation, the CMF may be a module independent of the network device, or may be integrated into a central unit (central unit, CU) module of the network device. The CMF may manage one or more computing resources in the terminal device, the network device, the core network, and the MEC platform.

In another implementation, the network device is an access network device in an open radio access network (radio access network, RAN) (Open-RAN, O-RAN) architecture. For example, the network device is a next-generation NodeB (next-generation NodeB, gNB) in the O-RAN architecture. The gNB is equipped with a RAN intelligent controller (RAN intelligent controller, RIC) functional entity. The RIC functional entity includes a near real-time RIC (near real-time RIC, NRT-RIC) functional module and a non-real-time RIC (non-real-time RIC, non-RT RIC) functional module. Based on the O-RAN architecture, the CMF function may be implemented in the following two manners.

Manner 1: As shown in FIG. 2, the CMF is integrated into the NRT-RIC functional entity in the gNB. In other words, the CMF is deployed in the NRT-RIC functional entity. Interfaces between modules are further described in the figure. For example, an interface between the CMF and the CU is an E2 interface, an interface between the CU and a DU is an F1 interface, and an interface between the NRT-RIC and the DU is an E2 interface.

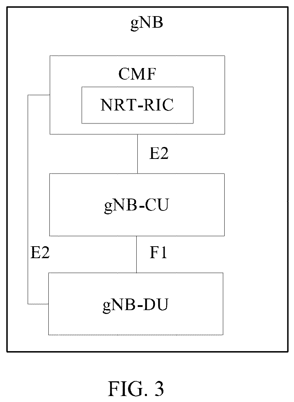

Manner 2: As shown in FIG. 3, the NRT-RIC functional entity is integrated into a CMF functional entity in the gNB. In other words, the CMF includes the NRT-RIC functional entity.

In addition, in another possible implementation, the NRT-RIC in FIG. 2 is replaced with the non-NRT RIC. To be specific, the CMF is deployed in the non-NRT RIC functional module.

In this application, the terminal device may be a device with a wireless transceiver function or a chip that can be disposed in any device. The terminal device may also be referred to as user equipment (user equipment, UE), an access terminal, a subscriber unit, a mobile station, a mobile device, a user terminal, a wireless communication device, or the like. The terminal device in this application may be a mobile phone (mobile phone), a tablet computer (Pad), a computer with a wireless transceiver function, a virtual reality (virtual reality, VR) terminal, an augmented reality (augmented reality, AR) terminal, a wearable device, a vehicle, an uncrewed aerial vehicle, an airplane, a ship, a robot, a smart home device, or the like. The terminal device in this application may be widely used in communication in various scenarios, for example, including but not limited to at least one of the following scenarios: device-to-device (device-to-device, D2D), vehicle-to-everything (vehicle-to-everything, V2X), machine type communication (machine type communication, MTC), internet of things (internet of things, IoT), virtual reality, augmented reality, industrial control, autonomous driving, telemedicine, a smart grid, smart furniture, smart office, a smart wearable, smart transportation, a smart city, or the like. A specific technology and a specific device form that are used for the terminal are not limited in this application.

The network device may be a base station (base station), an evolved NodeB (evolved NodeB, eNodeB), a transmission and reception point (transmission and reception point, TRP), a next-generation NodeB (next-generation NodeB, gNB) in a 5G mobile communication system, a network device in an open radio access network (open radio access network, O-RAN), a next-generation base station in a sixth-generation (6th generation, 6G) mobile communication system, a base station in a future mobile communication system, an access node in a wireless fidelity (wireless fidelity, Wi-Fi) system, or the like. Alternatively, the network device may be a module or a unit that performs some functions of a base station, for example, may be a central unit (central unit, CU), a distributed unit (distributed unit, DU), a central unit control plane (CU control plane, CU-CP) module, or a central unit user plane (CU user plane, CU-UP) module. A specific technology and a specific device form that are used for the network device are not limited in this application.

When the network device includes a CU and a DU, a plurality of DUs may be centrally controlled by one CU. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are deployed on the CU, and a function of a protocol layer (for example, a radio link control (radio link control, RLC) layer and a media access control (media access control, MAC) layer) below the packet data convergence protocol (packet data convergence protocol, PDCP) layer is deployed on the DU. For another example, a function of a protocol layer above a PDCP layer is deployed on the CU, and functions of the PDCP layer and a protocol layer below the PDCP layer are deployed on the DU. This is not limited.

The division of processing functions of the CU and the DU based on protocol layers is merely an example, and another division manner may alternatively be used. For example, the CU or the DU may have functions of more protocol layers through division. For another example, the CU or the DU may have some processing functions of a protocol layer through division.

For example, functions of the CU may be implemented by one entity, or may be implemented by different entities. For example, the functions of the CU may be further divided. To be specific, a control plane and a user plane are separated and implemented by different entities: a control plane CU entity (namely, a CU-CP entity) and a user plane CU entity (namely, a CU-UP entity). The CU-CP entity and the CU-UP entity may be coupled to the DU, to jointly complete functions of the network device.

Optionally, any one of the DU, the CU, the CU-CP, and the CU-UP may be a software module, a hardware structure, or a combination of a software module and a hardware structure. This is not limited. Different entities may exist in different forms. This is not limited. For example, the DU, the CU, the CU-CP, and the CU-UP are software modules. The modules and methods performed by the modules also fall within the protection scope of this application.

In a wireless communication system, an AI model may be used to significantly improve data processing efficiency. The AI model may also be referred to as a neural network model, a machine learning model, a deep neural network (deep neural network, DNN) model, or another name, and is uniformly referred to as an AI model in this application. The AI model is a mathematical model that imitates a behavioral feature of an animal neural network to process information. The AI model is a network that includes a plurality of computing layers. For example, the AI model may include a pooling layer (pooling layer), an activation function layer, a convolutional (convolutional, CONV) layer, and a fully connected (fully connected, FC) layer. Each layer of the AI model has one or more logic determining units. The logic determining unit is referred to as a neuron (neuron). In the AI model, each neuron performs a weighted summation operation on an input value of the neuron, and a non-linear function generates output based on a weighted summation result. A weight of the weighted summation operation of the neuron and the non-linear function in the AI model may be referred to as parameters of the AI model. A connection relationship between neurons in an AI model is referred to as a structure of the AI model, and parameters of all neurons in an AI model constitute parameters of the AI model.

A large amount of resources, such as computing power, memory, and power consumption, are needed for processing a service with a large amount of data by using the AI model. Computing power, storage, and a battery capacity of the terminal device are limited, and real-time computing of the service with a large amount of data cannot be supported locally. Therefore, in this application, the AI model may be deployed on the terminal device and the application server in a distributed manner, and the terminal device and the application server jointly execute the AI model. Specifically, the AI model may be split into a plurality of parts. For example, a computing-intensive or energy consumption-intensive part is offloaded to the application server, and a privacy-sensitive or latency-sensitive part is retained on the terminal device.

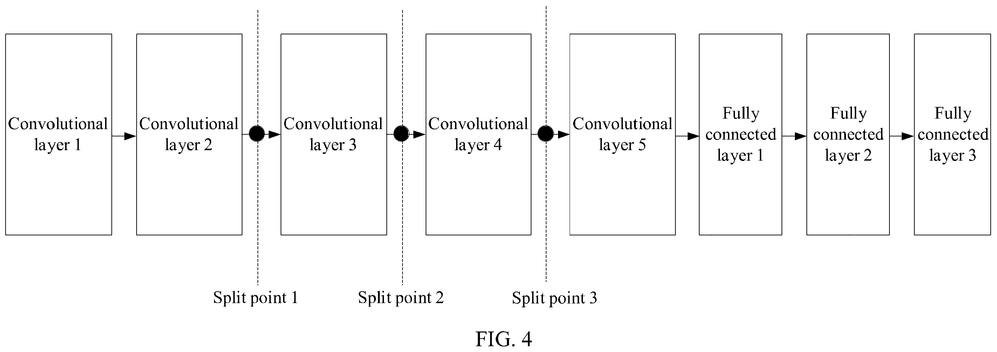

For example, FIG. 4 is a diagram of a structure of an AI model according to an embodiment of this application. In the figure, a main structure of the AI model includes five convolutional layers and three fully connected layers. A convolutional layer 1 to a convolutional layer 5 are sequentially connected, a fully connected layer 1 to a fully connected layer 3 are sequentially connected, and an input end of the fully connected layer 1 is connected to an output end of the convolutional layer 5. The AI model further includes three split points (split point). A split point 1 is located at an output end of the convolutional layer 2, a split point 2 is located at an output end of the convolutional layer 3, and a split point 3 is located at an output end of the convolutional layer 4. If the AI model is divided into two parts based on the split point 1, a first part obtained through splitting includes the convolutional layer 1 and the convolutional layer 2, and a second part obtained through splitting includes the convolutional layer 3 to the convolutional layer 5 and the fully connected layer 1 to the fully connected layer 3. In this case, the terminal device may execute the convolutional layer 1 and the convolutional layer 2, and then send an output result of the convolutional layer 2 to the application server. The application server then uses the output result as input for the convolutional layer 3, and executes the convolutional layer 3 to the convolutional layer 5 and the fully connected layer 1 to the fully connected layer 3, to obtain an inference result output by the AI model. A case in which the AI model is split based on another split point may be deduced by analogy, and details are not described again.

The AI model is split into a plurality of parts based on a split point, so that different parts of the AI model can be executed by different devices, to reduce a requirement for computing power, storage, and power consumption of executing the AI model by the terminal device.

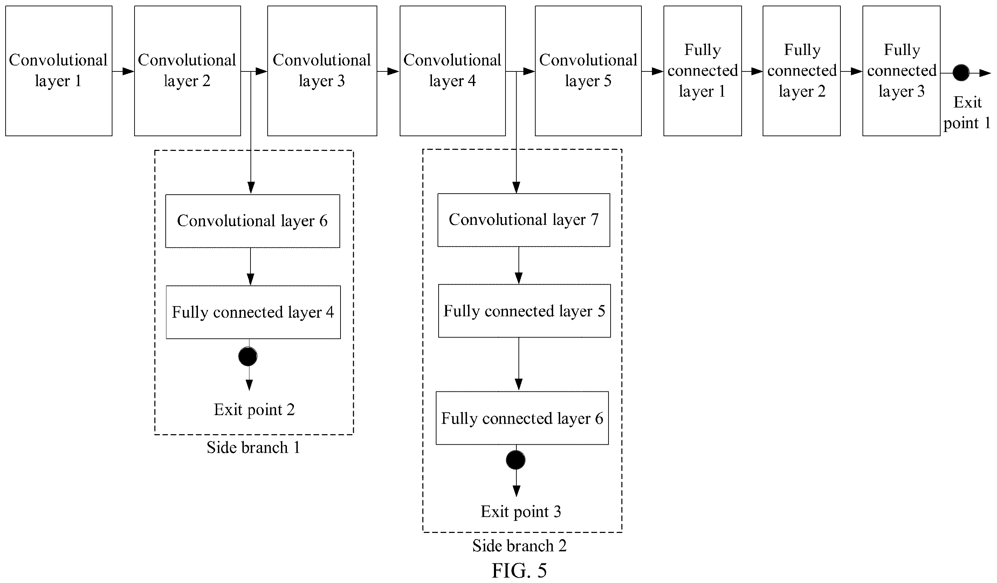

In an implementation, an AI model with a plurality of side branches (side branch) may be further obtained through training. When confidence of a side branch inference result is greater than a preset threshold, inference may be ended in advance. To be specific, execution of the AI model may be ended in advance, and a layer following the AI model is not to be executed. For example, FIG. 5 is a diagram of a structure of an AI model according to an embodiment of this application. In the figure, a main structure of the AI model includes five convolutional layers and three fully connected layers. A convolutional layer 1 to a convolutional layer 5 are sequentially connected, a fully connected layer 1 to a fully connected layer 3 are sequentially connected, and an input end of the fully connected layer 1 is connected to an output end of the convolutional layer 5. An output end of the fully connected layer 3 is an exit point (exit point) 1. An output end of the convolutional layer 2 includes a side branch 1, an output end of the convolutional layer 4 includes a side branch 2, an output end of the side branch 1 is an exit point 2, and an output end of the side branch 2 is an exit point 3. The side branch 1 includes a convolutional layer 6 and a fully connected layer 4, and the side branch 2 includes a convolutional layer 7, a convolutional layer 8, and a fully connected layer 5. If a selected exit point is the exit point 3, the convolutional layer 1 and the convolutional layer 2 of the AI model and the side branch 2 are finally executed, and other parts of the AI model are not to be executed.

In this manner, only a part located before an exit point in the AI model is executed, to reduce resource consumption needed for executing the AI model. A selected exit point being at a later position indicates higher accuracy of an inference result of the AI model.

Currently, when the AI model is deployed on the terminal device and the application server in a distributed manner, the AI model is usually split by using a fixed split point. Consequently, an AI model obtained through splitting cannot completely match capabilities of the terminal device and the application server, and cannot meet a requirement of an AI computing service. Therefore, this application provides a method for determining a split point of an AI model. Information such as power consumption and a network transmission rate may be considered for the split point. In this way, when an AI model obtained through splitting based on the split point runs on the terminal device and the application server, computing capabilities and communication capabilities of the terminal device and the application server can be fully utilized, to better meet a requirement of an AI computing service, and improve execution efficiency of the AI model.

The network architecture and the service scenario described in embodiments of this application are intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with evolution of the network architecture and emergence of a new service scenario.

The method provided in this application may be applied to the system shown in FIG. 1. When a method process provided in this application is applied to the system shown in FIG. 1, the network device in FIG. 1 or a module in the network device (for example, the CMF in the network device) may perform a method performed by a network device in the following processes. The method performed by the network device in the following processes may be performed by one or more modules in the network device. The plurality of modules may be a plurality of modules that are physically independent of each other, or may be a plurality of modules that are integrated together. The terminal device in FIG. 1 or a module in the terminal device may perform a method performed by a terminal device in the following processes. The application server in FIG. 1 or a module in the application server may perform a method performed by an application server in the following processes. It can be understood that a specific structure of an entity for performing the method provided in embodiments of this application is not particularly limited in embodiments shown below, provided that the entity can run a program that records code for the method provided in embodiments of this application to perform communication according to the method provided in embodiments of this application.

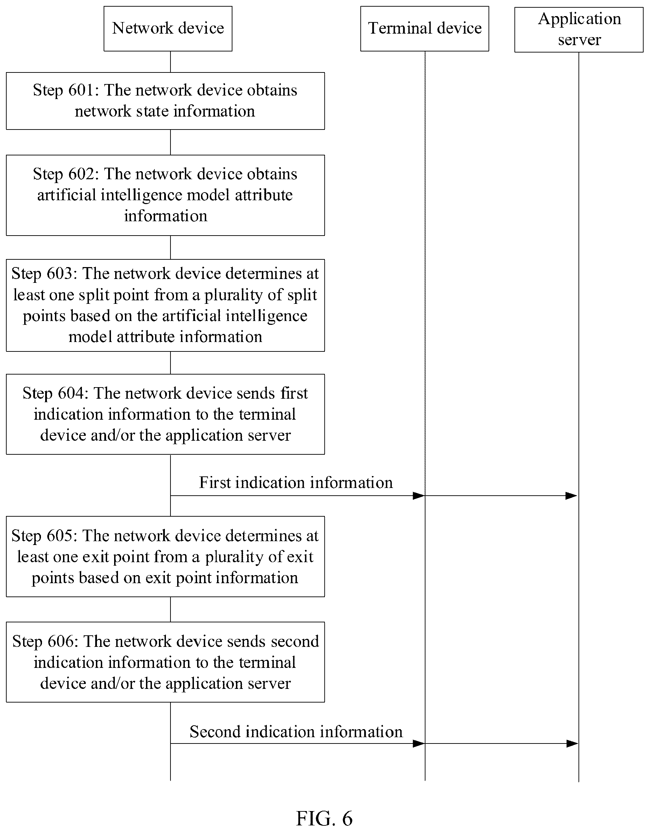

FIG. 6 is a schematic flowchart of a method for determining a split point according to an embodiment of this application. A sequence of steps in the process is merely an example, and does not indicate a limitation on the process. The method includes the following steps.

Step 601: A network device obtains network state information.

Step 601 is described by using an example in which the network device is an execution entity. During actual application, step 601 may alternatively be performed by a CMF in the network device, or may be performed by an application server. This is not limited in this application.

The network state information indicates at least one of a first transmission rate and first channel state information (channel state information, CSI). The first transmission rate may include at least one of a first uplink transmission rate and a first downlink transmission rate. The first channel state information may include at least one of first uplink channel state information and first downlink channel state information.

The network state information may be reported by the application server to the network device, or may be reported by the terminal device to the network device. This is not limited in this application.

In an implementation, the network device may further obtain first power consumption information of the terminal device. The first power consumption information indicates computing power consumption needed by the terminal device to execute the artificial intelligence model to a model that is before each of the plurality of split points. For example, the first power consumption information is hardware resource model information of the terminal device, and the computing power consumption needed for the terminal device to execute the artificial intelligence model to the model that is before each of the plurality of split points may be determined based on a hardware resource model of the terminal device. For example, the hardware resource model information of the terminal device is Adreno 740 GPU. Power of a chip of this model is 7.54 watts, computing power is 2.1 tera floating-point operations per second (tera floating-point operations per second, TFLOPS), and an energy efficiency ratio is 0.28 TFLOPS/watt. The computing power consumption needed by the terminal device to execute the artificial intelligence model to the model that is before each of the plurality of split points may be determined based on the foregoing information.

In an implementation, the network device may further obtain second power consumption information of the application server. The second power consumption information indicates computing power consumption needed by the application server to execute the artificial intelligence model to a model that is before each of the plurality of split points. For example, the second power consumption information is a hardware resource model of the application server, and the computing power consumption needed by the application server to execute the artificial intelligence model to the model that is before each of the plurality of split points may be determined based on the hardware resource model of the application server.

In an implementation, the network device may further obtain first computing power information of the terminal device. The first computing power information indicates a computing processing speed of the terminal device. For example, the first computing power information indicates a clock speed of a processor in the terminal device, a quantity of floating-point operations that can be performed by the processor per second, or a quantity of integer operations that can be performed by the processor per second.

In an implementation, the network device may further obtain second computing power information of the application server. The second computing power information indicates a computing processing speed of the application server. For example, the second computing power information indicates a clock speed of a processor in the application server, a quantity of floating-point operations that can be performed by the processor per second, or a quantity of integer operations that can be performed by the processor per second.

In this application, the network state information, the first power consumption information, the second power consumption information, the first computing power information, and the second computing power information may be carried in one message, or may be respectively carried in different messages. This is not limited in this application.

Step 602: The network device obtains artificial intelligence model attribute information.

Step 602 is described by using an example in which the network device is an execution entity. During actual application, step 602 may alternatively be performed by the CMF in the network device, or may be performed by the application server. This is not limited in this application. If this step is performed by the application server, the artificial intelligence model attribute information may be preconfigured on the application server, and the application server may directly obtain the artificial intelligence model attribute information locally.

If this step is performed by the network device, in an implementation, the application server or the terminal device sends a request message to the network device, where the request message carries the artificial intelligence model attribute information, so that the network device can obtain the artificial intelligence model attribute information based on the request message. The request message may further carry other information, for example, input data frame rate information of the artificial intelligence model. This is not limited in this application.

In another implementation, the application server or the terminal device sends a request message to the network device, where the request message includes service indication information, and the service indication information indicates a service type, and may indicate that a service initiated by the application server or the terminal device can support splitting of the artificial intelligence model.

In this implementation, each service type may correspond to one piece of artificial intelligence model attribute information. Artificial intelligence model attribute information corresponding to different service types is preconfigured on a core network device or an access network device. The network device may request, from the core network device or the access network device, artificial intelligence model attribute information corresponding to the service type indicated by the service indication information.

For example, if artificial intelligence model attribute information corresponding to different service types is preconfigured on the core network device and the network device includes the CMF, a CU, and a DU, the CMF in the network device may obtain, from the core network device, the artificial intelligence model attribute information corresponding to the service type indicated by the service indication information. Alternatively, the CMF in the network device may send the service indication information to the CU in the network device or the DU in the network device, and the CU in the network device or the DU in the network device obtains, from the core network device, the artificial intelligence model attribute information corresponding to the service type indicated by the service indication information.

For example, if artificial intelligence model attribute information corresponding to different service types is preconfigured on the access network device (for example, a CMF in the access network device) and the network device includes the CMF, a CU, and a DU, the CMF in the network device may determine the artificial intelligence model attribute information based on the service type indicated by the service indication information. Alternatively, the CMF in the network device may send the service indication information to the CU in the network device or the DU in the network device, and the CU in the network device or the DU in the network device obtains the artificial intelligence model attribute information corresponding to the service type indicated by the service indication information.

In this application, the artificial intelligence model attribute information indicates a plurality of split points of the artificial intelligence model. For example, the artificial intelligence model attribute information may indicate a position of each of the plurality of split points in the artificial intelligence model.

The artificial intelligence model attribute information may further indicate a performance indicator requirement of each split point. For example, the performance indicator requirement of the split point that is indicated by the artificial intelligence model attribute information may include at least one of the following:
identification information of the artificial intelligence model, where the identification information may be used to identify the artificial intelligence model, or may be used to identify a type or a model of the artificial intelligence model;
a transmission rate needed at each of the plurality of split points, where the transmission rate may include an uplink transmission rate and/or a downlink transmission rate;
channel state information needed at each of the plurality of split points, where the channel state information may include uplink channel state information and/or downlink channel state information;
power consumption needed at each of the plurality of split points;
a computing latency needed at each of the plurality of split points;
accuracy of an output result at each of the plurality of split points;
confidence of an output result at each of the plurality of split points; or
a size of data output at each of the plurality of split points.

For example, the artificial intelligence model includes N (N>1) split points. It is assumed that the input data frame rate information of the artificial intelligence model is 30 frames of images per second, and a size of each image is 227×227. Information indicated by the artificial intelligence model attribute information may be shown in Table 1.

**Table 1**

| Split point | Size of output data (MByte (MByte)) | Needed transmission rate (Mbit/s (Mbit/s)) | Needed power consumption (Watt W) | Needed computing latency (Millisecond ms) | Needed channel state information |
|---|---|---|---|---|---|
| Split point 1 | 0.15 | 36 | 1 | 0 | 15 |
| Split point 2 | 0.27 | 65 | 2.4 | 5 | 13 |
| ... | ... | ... | ... | ... | ... |
| Split point N | 0.02 | 4.8 | 13.9 | 40 | 0 |

Note: The needed channel state information in the table may be indicated by a channel quality indicator (Channel Quality Indicator, CQI). The CQI indicates uplink or downlink channel quality, and is a basis for a base station to perform scheduling. The base station selects an appropriate modulation order, code rate, downlink data block size, and the like based on CQI information, to ensure good transmission performance in different radio environments.

Table 1 is merely an example. During actual application, information indicated by the artificial intelligence model attribute information may include only one or more pieces of information in Table 1, and the one or more pieces of information may be optional or required information. A performance indicator requirement of each split point of the artificial intelligence model may be determined based on Table 1, so that a good split point can be selected. Details are described below.

In this application, the artificial intelligence model attribute information may further include exit point information. The exit point information may indicate a plurality of exit points of the artificial intelligence model. The exit point information may further indicate a performance indicator requirement of each exit point. For example, the performance indicator requirement of the exit point that is indicated by the exit point information may include at least one of the following:
a transmission rate needed at each of the plurality of exit points;
channel state information needed at each of the plurality of exit points;
power consumption needed at each of the plurality of exit points;
a computing latency needed at each of the plurality of exit points;
accuracy of an output result at each of the plurality of exit points;
confidence of an output result at each of the plurality of exit points; or
a data size of an output result at each of the plurality of exit points.

For example, the artificial intelligence model includes M (M>1) exit points. It is assumed that the input data frame rate information of the artificial intelligence model is 30 frames of images per second, and a size of each image is 227×227. Information indicated by the exit point information may be shown in Table 2.

**Table 2**

| Exit point | Size of output data (Megabyte) | Needed transmission rate (Megabit/ second) | Needed power consumption (W) | Needed computing latency (ms) | Needed channel state information | Accuracy | Confidence |
|---|---|---|---|---|---|---|---|
| Exit point 1 | 0.15 | 36 | 2.8 | 10 | 8 | 85 | 95 |
| Exit point 2 | 0.27 | 65 | 3 | 15 | 9 | 80 | 96 |
| ... | ... | ... | ... | ... | ... | ... | ... |
| Exit point M | 0.02 | 4.8 | 4 | 40 | 15 | 90 | 92 |

Table 2 is merely an example. During actual application, information indicated by the exit point information may include only one or more pieces of information in Table 2. A performance indicator requirement of each exit point of the artificial intelligence model may be determined based on Table 2, so that a good exit point can be selected. Details are described below.

Step 603: The network device determines at least one split point from the plurality of split points based on the artificial intelligence model attribute information.

Step 603 is described by using an example in which the network device is an execution entity. During actual application, step 603 may alternatively be performed by the CMF, the CU, or the DU in the network device, or may be performed by the application server. This is not limited in this application.

The network device may determine, from the plurality of split points based on the performance indicator requirement of each split point that is indicated by the artificial intelligence model attribute information, at least one split point that meets a preset performance indicator. This may be specifically classified into the following cases.

### Case 1:

The network device determines the at least one split point based on the first transmission rate indicated by the network state information and the transmission rate that is needed at each split point and that is indicated by the artificial intelligence model attribute information. In this case, a transmission rate needed at each of the at least one split point may be less than or equal to the first transmission rate. This can ensure that a requirement of a selected split point for a transmission rate matches a current transmission rate of a network.

### Case 2:

The network device determines the at least one split point based on the first channel state information indicated by the network state information and the channel state information that is needed at each split point and that is indicated by the artificial intelligence model attribute information. In this case, channel state information needed at each of the at least one split point may be less than or equal to the first channel state information. This can ensure that a requirement of a selected split point for channel state information matches current channel state information of a network.

### Case 3:

The network device determines the at least one split point based on the first power consumption information of the terminal device and the power consumption that is needed at each split point and that is indicated by the artificial intelligence model attribute information. In this case, power consumption needed at each of the at least one split point may be less than or equal to computing power consumption of executing, by the terminal device, a model located before the split point in the artificial intelligence model. This can ensure that a requirement of a selected split point for power consumption matches computing power consumption of executing the artificial intelligence model by the terminal device.

The first power consumption information may indicate the computing power consumption needed by the terminal device to execute the artificial intelligence model to the model that is before each of the plurality of split points. Therefore, for each split point, whether power consumption needed at each split point is less than or equal to computing power consumption needed by the terminal device to execute a model located before the split point in the artificial intelligence model may be determined based on the first power consumption information.

### Case 4:

The network device determines the at least one split point based on the first confidence and the confidence, indicated by the artificial intelligence model attribute information, of the output result at each split point. In this case, confidence of an output result at each of the at least one split point may be greater than or equal to the first confidence. This can ensure that confidence of an output result at a selected split point matches the first confidence.

The first confidence may be preset, or may be indicated by the application server or the terminal device. For example, the application server or the terminal device may send first confidence indication information to the network device, where the first confidence indication information indicates the first confidence.

### Case 5:

The network device determines the at least one split point based on the first accuracy and the accuracy, indicated by the artificial intelligence model attribute information, of the output result at each split point. In this case, accuracy of an output result at each of the at least one split point may be greater than or equal to the first accuracy. This can ensure that accuracy of an output result at a selected split point matches the first accuracy.

The first accuracy may be preset, or may be indicated by the application server or the terminal device. For example, the application server or the terminal device may send first accuracy indication information to the network device, where the first accuracy indication information indicates the first accuracy.

### Case 6:

The network device determines the at least one split point based on the first latency and the computing latency that is needed at each split point and that is indicated by the artificial intelligence model attribute information. In this case, a computing latency needed at each of the at least one split point may be less than or equal to the first latency. This can ensure that a requirement of a selected split point for a latency matches the first latency.

The first latency may be preset, or may be determined in another manner. For example, the first latency is determined based on the network state information and the first computing power information, or the first latency is determined based on the network state information and the second computing power information.

In an implementation, if an artificial intelligence model before a split point is executed by the terminal device, a computing latency of executing the artificial intelligence model before the split point by the terminal device may be determined based on the first computing power information, and then a transmission latency of data output at the split point is determined based on the network state information and a size of the data output at the split point. The first latency may be obtained by adding up the two latencies.

In an implementation, if an artificial intelligence model before a split point is executed by the application server, a computing latency of executing the artificial intelligence model before the split point by the application server may be determined based on the second computing power information, and then a transmission latency of data output at the split point is determined based on the network state information and a size of the data output at the split point. The first latency may be obtained by adding up the two latencies.

The foregoing case 1 to case 6 may alternatively be performed in combination. To be specific, each of the at least one split point may meet at least one of the following:

A transmission rate needed at the split point is less than or equal to the first transmission rate;
channel state information needed at the split point is less than or equal to the first channel state information;
power consumption needed at the split point is less than or equal to power consumption of executing, by the terminal device, a model located before the split point in the artificial intelligence model;
confidence of an output result at the split point is greater than or equal to first confidence;
accuracy of an output result at the split point is greater than or equal to first accuracy; or
a computing latency needed at the split point is less than or equal to a first latency.

For example, the at least one split point determined by the network device is a split point, among the plurality of split points of the artificial intelligence model, at which a needed transmission rate is less than or equal to the first transmission rate, a needed computing latency is less than or equal to the first latency, and confidence of an output result is greater than or equal to the first confidence.

For example, the at least one split point determined by the network device is a split point, among the plurality of split points of the artificial intelligence model, at which accuracy of an output result is greater than or equal to the first accuracy, confidence of the output result is greater than or equal to the first confidence, and a needed latency is less than or equal to the first latency.

For example, the at least one split point determined by the network device is at least one split point, among the plurality of split points in the artificial intelligence model, at which a needed transmission rate is less than or equal to the first transmission rate, a needed latency is less than or equal to the first latency, and confidence or accuracy of an output result is the highest.

For example, the at least one split point determined by the network device is at least one split point, among the plurality of split points of the artificial intelligence model, at which accuracy of an output result is greater than or equal to the first accuracy, needed power consumption is less than or equal to computing power consumption of executing, by the terminal device, a model located before a split point in the artificial intelligence model, and a needed computing latency is less than or equal to the first latency, or a needed computing latency is the lowest.

The foregoing descriptions are merely examples. Other cases may be deduced by analogy, and details are not described herein again.

Step 604: The network device sends first indication information to the terminal device and/or the application server, where the first indication information indicates the at least one split point.

In an implementation, the first indication information may directly indicate the at least one split point. For example, the first indication information includes an identifier of the at least one split point.

In an implementation, the first indication information may indirectly indicate the at least one split point. For example, the first indication information indicates a parameter related to target quality of service (Quality of Service, QoS) profile (Profile) information, the parameter related to the target QoS configuration information has a correspondence with service parameter information, and task split point information includes the at least one split point. For example, the service parameter information may include at least one of the following: a bit rate, a code rate, a frame rate, a resolution, encoding/decoding (or compression/decompression) parameter information of a multimedia service, or the task split point information.

The network device uses downlink control information (Downlink control information, DCI) to carry the parameter related to the target QoS profile information.

The parameter related to the target QoS configuration information includes at least one of the following: an identifier of the target QoS configuration information, a parameter that is included in the target QoS configuration information and that is related to power consumption of the terminal device, task computing accuracy included in the target QoS configuration information, a guaranteed flow bit rate (guaranteed flow bit rate, GFBR) included in the target QoS configuration information, a packet delay budget (packet delay budget, PDB) included in the target QoS configuration information, a packet error rate (packet error rate, PER), or a guaranteed bit rate (guaranteed bit rate, GBR) included in the target QoS configuration information.

The parameter related to the power consumption of the terminal device includes at least one of the following: computing power consumption of the terminal device, total power consumption of the terminal device, total energy consumption of the terminal device, or transmission power consumption of the terminal device. The transmission power consumption of the terminal device may be replaced with transmit power consumption of the terminal device. The total power consumption of the terminal device includes the computing power consumption of the terminal device and the transmit power consumption of the terminal device. Any one of the foregoing types of power consumption is measured in watts or the like, and any one of the foregoing types of energy consumption is measured in joules or the like.

The target QoS profile (QoS Profile) information may be one piece of candidate QoS profile (Alternative QoS Profile) information determined by the network device from one or more pieces of candidate QoS profile information. Any one of the one or more pieces of candidate QoS configuration information includes at least one of the following: a parameter related to power consumption of the terminal device, task computing accuracy, a guaranteed flow bit rate (guaranteed flow bit rate, GFBR), a packet delay budget (packet delay budget, PDB), a packet error rate (packet error rate, PER), or a guaranteed bit rate (guaranteed bit rate, GBR). For example, if the network device is a network device, a QoS profile is a file configured by a core network, and can ensure quality of data transmission between the terminal device and the network device. Therefore, before data is transmitted between the terminal device and the network device, the network device may obtain the QoS profile from the core network, and map a QoS flow to a data radio bearer (data radio bearer, DRB) based on the QoS profile. Then data of a corresponding QoS flow may be transmitted between the terminal device and the network device based on the DRB.

For example, a plurality of pieces of candidate QoS configuration information may be described in a manner shown in Table 3. It can be learned from Table 3 that a value of a quantity of pieces of candidate QoS configuration information ranges from 1 to 8, and a value type is an integer (INTEGER). A value of an identifier of candidate QoS configuration information ranges from 1 to 64, and a value type is an integer. A value of computing power consumption of the terminal device ranges from 0 watts (watt) to 6.3 watts, a value type is an integer, and a unit (unit) is 0.1 watt. A value of task computing accuracy ranges from 60% to 90%, a value type is an integer, and a unit is 1%. It should be understood that content of Table 3 is merely an example. For other cases, refer to descriptions of a candidate QoS configuration information set in the 3rd generation partnership project (the 3rd generation partnership project, 3GPP).

**Table 3**

| Information element (information element, IE) name | Value range (range) | IE value type (IE type) |
|---|---|---|
| Quantity of candidate QoS configuration information sets | [1, 8] | A value type is an integer. For example, a value is an integer ranging from 1 to 8. A value of the IE being 1 indicates that the quantity of candidate QoS configuration information sets is 1, a value of the IE being 2 indicates that the quantity of candidate QoS configuration information sets is 2, and other cases are deduced by analogy. |
| Identifier of a candidate QoS configuration information set | [1, 64] | A value type is an integer. For example, a value is an integer ranging from 1 to 64. A value of the IE being 1 indicates that the identifier of the candidate QoS configuration information set is 1, a value of the IE being 2 indicates that the identifier of the candidate QoS configuration information set is 2, and other cases are deduced by analogy. |
| GFBR | N/A | N/A |
| PDB | N/A | N/A |
| PER | N/A | N/A |
| GBR | N/A | N/A |
| Guaranteed transmission data size | N/A | N/A |
| Computing power consumption of the terminal device | [0, 63] | A value type is an integer. For example, a value is an integer ranging from 0 to 63. A value of the IE being 0 indicates that the computing power consumption of the terminal device is 0, a value of the IE being 1 indicates that the computing power consumption of the terminal device is 0.1 watt, and other cases are deduced by analogy. |
| Task computing accuracy | [60%, 90%] | A value type is an integer. For example, a value is an integer ranging from 0 to 39. A value of the IE being 0 indicates that the computing accuracy is 60%, a value of the IE being 1 indicates that the computing accuracy is 61%, and other cases are deduced by analogy. |

It can be understood that, if a session established by the network device for the terminal device and the application server includes a plurality of QoS flows that support a plurality of pieces of candidate QoS configuration information, the first indication information may further indicate a parameter, related to the target QoS configuration information, of each QoS flow. Parameters, related to the target QoS configuration information, of different QoS flows may correspond to same or different service parameter information. Therefore, the first indication information may further include a related identifier of a QoS flow corresponding to the target QoS configuration information. The related identifier of the QoS flow may be an identifier of a DRB (DRB identifier) to which the QoS flow is mapped on an air interface, a logical channel identifier (logical channel identifier, LCID), an identifier of a first session, or the like.

Step 604 is described by using an example in which the network device is an execution entity. During actual application, step 604 may alternatively be performed by the CMF, the CU, or the DU in the network device, or may be performed by the application server. This is not limited in this application.

In an implementation, when the CMF in the network device performs this step, the CMF in the network device may send an edge resource control (edge resource control, ERC) protocol layer message to the terminal device and/or the application server, where the edge resource control protocol layer message carries the first indication information. An edge resource control protocol layer may be a new protocol layer in a 5G NR protocol stack.

In an implementation, when the CU in the network device performs this step, the CU in the network device may send a radio resource control message to the terminal device and/or the application server, where the radio resource control message carries the first indication information.

In an implementation, when the DU in the network device performs this step, the DU in the network device may send MAC CE signaling to the terminal device and/or the application server, where the MAC CE signaling carries the first indication information.

In an implementation, when the CMF in the network device performs this step, the CMF in the network device may send non-access stratum (non-access stratum, NAS) signaling to the terminal device and/or the application server, where the non-access stratum signaling carries the first indication information.

In an implementation, when the application server performs this step, the application server may send the first indication information to the terminal device.

The network device may further indicate other information to the terminal device and/or the application server, for example, may further indicate the identification information of an artificial intelligence model. This is not limited in this application.

According to the foregoing method, a split point is determined based on the network state information, the artificial intelligence model attribute information, or other information, so that the determined at least one split point can meet performance indicators such as a transmission rate, channel state information, power consumption, and a latency. In this way, a part, obtained through division based on the split point, of the artificial intelligence model can be executed on the terminal device, and another part is executed on the application server, so that an artificial intelligence model obtained through division can better adapt to terminal devices and application servers with different capabilities, and better meet a requirement of an artificial intelligence model computing service in a device-edge collaborative system.

Step 605: The network device determines at least one exit point from the plurality of exit points based on the exit point information.

Step 605 is described by using an example in which the network device is an execution entity. During actual application, step 605 may alternatively be performed by the CMF, the CU, or the DU in the network device, or may be performed by the application server. This is not limited in this application.

How the network device specifically determines the at least one exit point may be classified into a plurality of cases.

### Case one:

The network device determines the at least one exit point based on the first transmission rate indicated by the network state information and the transmission rate that is needed at each exit point and that is indicated by the exit point information. In this case, a transmission rate needed at each of the at least one exit point may be less than or equal to the first transmission rate. This can ensure that a requirement of a selected exit point for a transmission rate matches a current transmission rate of a network.

### Case two:

The network device determines the at least one exit point based on the first channel state information indicated by the network state information and the channel state information that is needed at each exit point and that is indicated by the exit point information. In this case, channel state information needed at each of the at least one exit point may be less than or equal to the first channel state information. This can ensure that a requirement of a selected exit point for channel state information matches current channel state information of a network.

### Case three:

The network device determines the at least one exit point based on the first power consumption information of the terminal device, the second power consumption information of the application server, and the power consumption that is needed at each exit point and that is indicated by the exit point information. In this case, power consumption needed at each of the at least one exit point may be less than or equal to power consumption of executing a model located before the exit point in the artificial intelligence model.

The first power consumption information may indicate power consumption of executing each layer of the artificial intelligence model by the terminal device, and the second power consumption information may indicate power consumption of executing each layer of the artificial intelligence model by the application server. Therefore, for each exit point, power consumption of executing a model located before the exit point in the artificial intelligence model may be determined based on the first power consumption information and the second power consumption information.

### Case four:

The network device determines the at least one exit point based on second confidence and the confidence, indicated by the exit point information, of the output result at each exit point. In this case, confidence of an output result at each of the at least one exit point may be greater than or equal to the second confidence. This can ensure that confidence of an output result at a selected exit point matches the second confidence.

The second confidence may be preset, or may be indicated by the application server or the terminal device. For example, the application server or the terminal device may send second confidence indication information to the network device, where the second confidence indication information indicates the second confidence.

### Case five:

The network device determines the at least one exit point based on second accuracy and the accuracy, indicated by the exit point information, of the output result at each exit point. In this case, accuracy of an output result at each of the at least one exit point may be greater than or equal to the second accuracy. This can ensure that accuracy of an output result at a selected exit point matches the second accuracy.

The second accuracy may be preset, or may be indicated by the application server or the terminal device. For example, the application server or the terminal device may send second accuracy indication information to the network device, where the second accuracy indication information indicates the second accuracy.

### Case six:

The network device determines the at least one exit point based on a second latency and the computing latency that is needed at each exit point and that is indicated by the exit point information. In this case, a computing latency needed at each of the at least one exit point may be less than or equal to the second latency. This can ensure that a requirement of a selected exit point for a computing latency matches the second latency.

The second latency may be preset, or may be determined in another manner. For example, the second latency is determined based on the network state information, the first computing power information, and the second computing power information.

In an implementation, if the terminal device first executes the artificial intelligence model, a computing latency of executing an artificial intelligence model before a split point by the terminal device may be determined based on the first computing power information, then a transmission latency of data output at the split point is determined based on the network state information and a size of the data output at the split point, and then a computing latency of executing an artificial intelligence model after the split point and before an exit point by the application server is determined based on the second computing power information. The second latency may be obtained by adding up the three latencies.

In an implementation, if the application server first executes the artificial intelligence model, a computing latency of executing an artificial intelligence model before a split point by the application server may be determined based on the second computing power information, then a transmission latency of data output at the split point is determined based on the network state information and a size of the data output at the split point, and then a computing latency of executing an artificial intelligence model after the split point and before an exit point by the terminal device is determined based on the first computing power information. The second latency may be obtained by adding up the three latencies.

The foregoing case 1 to case 6 may alternatively be performed in combination. To be specific, each of the at least one exit point may meet at least one of the following:

A transmission rate needed at the exit point is less than or equal to the first transmission rate;
channel state information needed at the exit point is less than or equal to the first channel state information;
power consumption needed at the exit point is less than or equal to power consumption of executing a model located before the exit point in the artificial intelligence model;
confidence of an output result at the exit point is greater than or equal to second confidence;
accuracy of an output result at the exit point is greater than or equal to second accuracy; or
a computing latency needed at the exit point is less than or equal to a second latency.

For example, the at least one exit point determined by the network device is at least one exit point, among the plurality of exit points of the artificial intelligence model, at which a needed transmission rate is less than or equal to the first transmission rate, a needed computing latency is less than or equal to the second latency, and confidence of an output result is greater than or equal to the second confidence, or confidence of an output result is the highest.

For example, the at least one exit point determined by the network device is at least one exit point, among the plurality of exit points of the artificial intelligence model, at which accuracy of an output result is greater than or equal to the second accuracy, confidence of the output result is greater than or equal to the second confidence, and a needed latency is less than or equal to the second latency, or a needed computing latency is the lowest.

For example, the at least one exit point determined by the network device is an exit point, among the plurality of exit points of the artificial intelligence model, at which accuracy of an output result is greater than or equal to the second accuracy, needed power consumption is less than or equal to power consumption of executing, by the terminal device, a model located before an exit point in the artificial intelligence model, and a needed computing latency is less than or equal to the second latency.

The foregoing descriptions are merely examples. Other cases may be deduced by analogy, and details are not described herein again.

In an implementation, a recognition rate at each exit point may be further determined based on the input data frame rate of the artificial intelligence model and a size of data output at each exit point. The recognition rate may be represented as a quantity of video frames on which the artificial intelligence model performs inference per second.

Step 606: The network device sends second indication information to the terminal device and/or the application server, where the second indication information indicates the at least one exit point.

Step 606 is described by using an example in which the network device is an execution entity. During actual application, step 606 may alternatively be performed by the CMF, the CU, or the DU in the network device, or may be performed by the application server. This is not limited in this application.

In an implementation, when the CMF in the network device performs this step, the CMF in the network device may send an edge resource control protocol layer message to the terminal device and/or the application server, where the edge resource control protocol layer message carries the second indication information.

In an implementation, when the CU in the network device performs this step, the CU in the network device may send a radio resource control message to the terminal device and/or the application server, where the radio resource control message carries the second indication information.

In an implementation, when the DU in the network device performs this step, the DU in the network device may send MAC CE signaling to the terminal device and/or the application server, where the MAC CE signaling carries the second indication information.

In an implementation, when the CMF in the network device performs this step, the CMF in the network device may send non-access stratum signaling to the terminal device and/or the application server, where the non-access stratum signaling carries the second indication information.

In an implementation, when the application server performs this step, the application server may send the second indication information to the terminal device.

The network device may further indicate other information to the terminal device and/or the application server, for example, indicate a recognition rate at each of the at least one exit point. In this way, when selecting an exit point actually to be used from the at least one exit point, the terminal device or the application server may consider a recognition rate, for example, select an exit point with a high recognition rate.

According to the foregoing method, an exit point is determined based on the network state information, the artificial intelligence model attribute information, or other information, so that the determined at least one exit point can meet performance indicators such as a transmission rate, channel state information, power consumption, and a latency. In this way, when the artificial intelligence model is executed based on a selected exit point, resource consumption needed for executing the artificial intelligence model is reduced, and a requirement of an artificial intelligence model computing service is better met.

In this application, the artificial intelligence model may be configured on the terminal device and the application server in a distributed manner, and the terminal device and the application server each execute a part of the artificial intelligence model, to reduce a requirement for computing power, storage, and power consumption of executing the artificial intelligence model by the terminal device. In this application, a model located before a split point in the artificial intelligence model may be referred to as a first part of model, and a model located after the split point in the artificial intelligence model may be referred to as a second part of model. An example in which the terminal device first executes a model part before a split point is used below for description. For a case in which the application server first executes a model part before a split point, refer to the following descriptions. Details are not described herein.

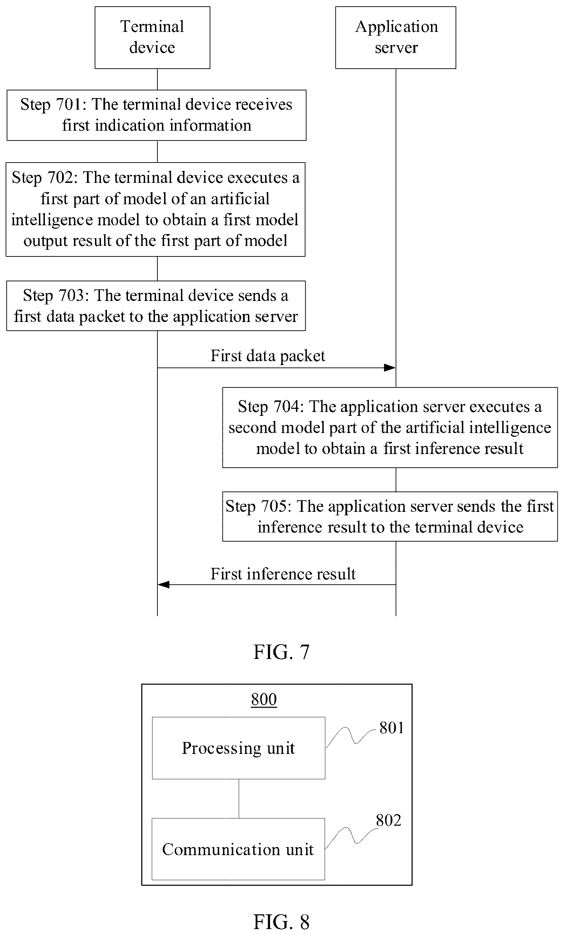

FIG. 7 is a schematic flowchart of a method for executing an artificial intelligence model according to an embodiment of this application. The method includes the following steps.

Step 701: A terminal device receives first indication information.

In an implementation, the first indication information indicates at least one split point of an artificial intelligence model. In an implementation, the first indication information indicates a parameter related to target QoS configuration information.

If the process shown in FIG. 6 is performed by a network device, the first indication information is from the network device. If the process shown in FIG. 6 is performed by an application server, the first indication information is from the application server.

Step 702: The terminal device executes a first part of model of the artificial intelligence model to obtain a first model output result of the first part of model.

Optionally, step 702 may be replaced with the following: The terminal device may determine, based on the first indication information, the parameter related to the target QoS configuration information, and then determine service parameter information based on the parameter related to the target QoS configuration information, to provide a better service for a user.

For example, the parameter related to the target QoS configuration information has a correspondence with the service parameter information. In this way, the terminal device can determine the service parameter information based on the correspondence. For example, the service parameter information may include at least one of the following: a bit rate, a code rate, a frame rate, a resolution, encoding/decoding (or compression/decompression) parameter information of a multimedia service, or task split point information. Optionally, information about the correspondence is stored on the terminal device, or is obtained by the terminal device from another device.

In another possible implementation, after receiving the first indication information, the terminal device may determine, based on the first indication information, a specific one of a plurality of pieces of candidate QoS configuration information that is the target QoS configuration information, and then determine service parameter information based on the target QoS configuration information, to provide a better service for a user.

For example, the target QoS configuration information has a correspondence with the service parameter information. In this way, the terminal device can determine the service parameter information based on the correspondence. Optionally, information about the correspondence is stored on the terminal device, or is obtained by the terminal device from another device. Optionally, each of the plurality of pieces of candidate QoS configuration information may have a correspondence with the service parameter information.

It can be understood that, if the service parameter information includes the bit rate, the terminal device may transmit data based on the bit rate. If the service parameter information includes the code rate, the terminal device may transmit data based on the code rate. If the service parameter information includes the frame rate, the terminal device and/or a computing node may transmit data based on the frame rate. If the service parameter information includes the resolution, the terminal device may process data based on the resolution. If the service parameter information includes the encoding/decoding (or compression/decompression) parameter information of the multimedia service, the terminal device may process data based on the encoding/decoding (or compression/decompression) parameter information of the multimedia service. If the service parameter information includes the task split point information, the terminal device may perform a task based on a task split point indicated by the task split point information.

In this application, the terminal device may select a split point from the at least one split point indicated by the first indication information. In the following descriptions, the split point selected by the terminal device is referred to as a first split point. The terminal device executes a model located before the first split point in the artificial intelligence model, that is, the first part of model. The application server executes a model located after the first split point in the artificial intelligence model, that is, a second part of model.

A specific split point specifically selected by the terminal device from the at least one split point as the first split point is not limited in this application. For example, the terminal device may use a split point, at which an output result has highest accuracy, among the at least one split point as the first split point; or the terminal device may use any one of the at least one split point as the first split point.

Step 703: The terminal device sends a first data packet to the application server, where the first data packet includes the first model output result and third indication information, and the third indication information indicates the first split point. The third indication information may be carried in a header of the first data packet, and information about the first split point is indicated by a preset format or a special field. For example, it is assumed that there are four split points. A selected split point may be indicated by the 1^{st} bit and the 2^{nd} bit in the header of the first data packet, where 00 indicates a split point 0, 01 indicates a split point 1, 10 indicates a split point 2, and 11 indicates a split point 3.

Step 704: The application server executes the artificial intelligence model based on the first split point to obtain a first inference result.

Specifically, the application server executes the second part of model of the artificial intelligence model based on the first split point. The application server uses the first model output result as input data for the second part of model.

In this application, the application server may select an exit point from at least one exit point as a first exit point. When executing the second part of model of the artificial intelligence model, the application server ends the execution of the artificial intelligence model at the first exit point.

A specific exit point specifically selected by the application server from the at least one exit point as the first exit point is not limited in this application. For example, the application server may use an exit point with a highest recognition rate among the at least one exit point as the first exit point, or the application server may use any one of the at least one exit point as the first exit point.

If the process shown in FIG. 6 is performed by the network device, the network device may send second indication information to the application server, and the application server determines the at least one exit point based on the second indication information. If the process shown in FIG. 6 is performed by the application server, the application server may directly determine the at least one exit point.

Step 705: The application server sends the first inference result to the terminal device.

Correspondingly, the terminal device receives the first inference result.

According to the foregoing method, the terminal device selects a split point from the at least one split point to execute the artificial intelligence model. In this way, a part, obtained through division based on the split point, of the artificial intelligence model can be executed on the terminal device, and another part is executed on the application server, so that an artificial intelligence model obtained through division can better adapt to terminal devices and application servers with different capabilities, and better meet a requirement of an artificial intelligence model computing service in a device-edge collaborative system. Further, when executing the another part of the artificial intelligence model, the application server may select an exit point as the first exit point, and the application server ends the execution of the artificial intelligence model at the first exit point. This reduces resource consumption needed for executing the artificial intelligence model, and better meets a requirement of an artificial intelligence model computing service.

In the foregoing embodiments provided in this application, the method provided in embodiments of this application is described from a perspective of interaction between devices. To implement the functions in the method provided in the foregoing embodiments of this application, the network device, the terminal device, or the application server may include a hardware structure and/or a software module, to implement the foregoing functions in a form of the hardware structure, the software module, or a combination of the hardware structure and the software module. Whether a specific function of the foregoing functions is performed by the hardware structure, the software module, or the combination of the hardware structure and the software module depends on particular applications and design constraints of the technical solutions.

In embodiments of this application, division into the modules is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Based on a same concept as that of the foregoing descriptions, as shown in FIG. 8, an embodiment of this application further provides a communication apparatus 800, configured to implement a function of the network device, the terminal device, or the application server in the foregoing methods. For example, the apparatus may be a software module or a chip system. In this embodiment of this application, the chip system may include a chip, or may include a chip and another discrete component. The communication apparatus 800 may include a processing unit 801 and a communication unit 802.

In this embodiment of this application, the communication unit may also be referred to as a transceiver unit, and may include a sending unit and/or a receiving unit, which are respectively configured to perform a sending step and a receiving step of the network device, the terminal device, or the application server in the foregoing method embodiments.

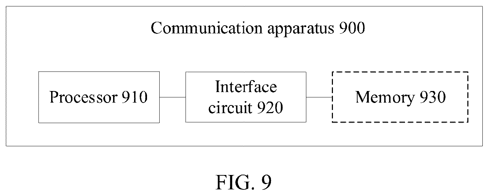

The communication apparatus provided in embodiments of this application is described below in detail with reference to FIG. 8 and FIG. 9. It should be understood that descriptions of apparatus embodiments correspond to the descriptions of the method embodiments. Therefore, for content that is not described in detail, refer to the method embodiments. For brevity, details are not described herein again.

The processing unit may also be referred to as a processor, a processing board, a processing module, a processing apparatus, or the like. The communication unit may also be referred to as a transceiver, a transceiver device, a transceiver apparatus, or the like.

In an implementation, the communication apparatus 800 may perform the following functions:
The communication unit is configured to obtain network state information, first power consumption information of a terminal device, and artificial intelligence model attribute information, where the network state information indicates at least one of a first transmission rate and first channel state information, and the artificial intelligence model attribute information indicates a plurality of split points of an artificial intelligence model, a transmission rate needed at each of the plurality of split points, and power consumption needed at each of the plurality of split points, and the first power consumption information indicates computing power consumption needed by the terminal device to execute the artificial intelligence model to a model that is before each of the plurality of split points.

The processing unit is configured to determine at least one split point from the plurality of split points based on the network state information, the first power consumption information, and the artificial intelligence model attribute information.

In an implementation, the communication apparatus 800 may perform the following functions:
The communication unit is configured to receive first indication information from a network device, where the first indication information indicates at least one split point of an artificial intelligence model, the at least one split point is determined from the plurality of split points based on network state information, first power consumption information, and artificial intelligence model attribute information, the network state information indicates at least one of a first transmission rate and first channel state information, the artificial intelligence model attribute information indicates a plurality of split points of the artificial intelligence model, a transmission rate needed at each of the plurality of split points, and power consumption needed at each of the plurality of split points, and the first power consumption information indicates power consumption of executing each layer of the artificial intelligence model by the terminal device.

The processing unit is configured to execute a first part of model of the artificial intelligence model to obtain a first model output result of the first part of model, where the first part of model is a part located before a first split point in the artificial intelligence model, and the first split point is one of the at least one split point.

The communication unit is configured to: send a first data packet to an application server, where the first data packet includes the first model output result and third indication information, and the third indication information indicates the first split point; and receive a first inference result from the application server, where the first inference result is determined by executing the artificial intelligence model based on the first model output result and the first split point.

In an implementation, the communication apparatus 800 may perform the following functions:
The communication unit is configured to receive a first data packet from a terminal device, where the first data packet includes a first model output result and third indication information, and the third indication information indicates a first split point.

The processing unit is configured to execute a second part of model of an artificial intelligence model based on the first split point to obtain a first inference result, where a first model output result is used as input data of the second part of model, and the second part of model is a part located after the first split point in the artificial intelligence model.

The communication unit is configured to send the first inference result to the terminal device.

The foregoing descriptions are merely examples. The processing unit 801 and the communication unit 802 may alternatively perform other functions. For more detailed descriptions, refer to related descriptions in the foregoing method embodiments. Details are not described herein again.

FIG. 9 shows a communication apparatus 900 according to an embodiment of this application. The apparatus shown in FIG. 9 may be an implementation of a hardware circuit of the apparatus shown in FIG. 8. The communication apparatus is applicable to the foregoing flowcharts, to perform a function of the network device, the terminal device, or the application server in the foregoing method embodiments. For ease of description, FIG. 9 shows only main components of the communication apparatus.

As shown in FIG. 9, the communication apparatus 900 includes a processor 910 and an interface circuit 920. The processor 910 and the interface circuit 920 are coupled to each other. It can be understood that the interface circuit 920 may be a transceiver or an input/output interface.

Optionally, in an implementation, the communication apparatus 900 may further include a memory 930, configured to store instructions to be executed by the processor 910, or store input data needed for running instructions by the processor 910, or store data generated after the processor 910 runs instructions.

When the communication apparatus 900 is configured to implement the foregoing methods, the processor 910 is configured to implement a function of the processing unit 801, and the interface circuit 920 is configured to implement a function of the communication unit 802.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk drive, a CD-ROM, or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be located in an ASIC.

A person skilled in the art should understand that embodiments of this application may be provided as a method, a system, or a computer program product. Therefore, this application may be implemented in a form of a hardware-only embodiment, a software-only embodiment, or an embodiment with a combination of software and hardware. In addition, this application may be implemented in a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can indicate the computer or the another programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

Clearly, a person skilled in the art can make various modifications and variations to this application without departing from the scope of this application. This application is intended to cover these modifications and variations of this application provided that they fall within the scope of the claims of this application and their equivalent technologies.

## Claims

1. A method for determining a split point, wherein the method is applied to a network device or a module in the network device, and comprises:
obtaining network state information, first power consumption information of a terminal device, and artificial intelligence model attribute information, wherein the network state information indicates at least one of a first transmission rate and first channel state information, the artificial intelligence model attribute information indicates a plurality of split points of an artificial intelligence model, a transmission rate needed at each of the plurality of split points, and power consumption needed at each of the plurality of split points, the first power consumption information indicates computing power consumption needed by the terminal device to execute the artificial intelligence model to a model that is before each of the plurality of split points; and
determining at least one split point from the plurality of split points based on the network state information, the first power consumption information, and the artificial intelligence model attribute information.

2. The method according to claim 1, wherein each of the at least one split point meets at least one of the following:
a transmission rate needed at the split point is less than or equal to the first transmission rate;
channel state information needed at the split point is less than or equal to the first channel state information; or
power consumption needed at the split point is less than or equal to computing power consumption of executing, by the terminal device, a model located before the split point in the artificial intelligence model.

3. The method according to claim 1 or 2, wherein the artificial intelligence model attribute information further indicates confidence and accuracy of an output result at each of the plurality of split points, and the artificial intelligence model attribute information further indicates a latency needed at each of the plurality of split points, wherein
each of the at least one split point further meets at least one of the following:
confidence of an output result at the split point is greater than or equal to first confidence;
accuracy of an output result at the split point is greater than or equal to first accuracy; or
a computing latency needed at the split point is less than or equal to a first latency.

4. The method according to claim 3, wherein the method further comprises:
obtaining first computing power information of the terminal device and second computing power information of an application server, wherein the first computing power information indicates a computing processing speed of the terminal device, and the second computing power information indicates a computing processing speed of the application server; and
determining the first latency based on the network state information, the first computing power information, and the second computing power information.

5. The method according to claim 3 or 4, wherein the method further comprises:
obtaining first confidence information and/or first accuracy information, wherein the first confidence information indicates the first confidence, and the first accuracy information indicates the first accuracy.

6. The method according to any one of claims 1 to 5, wherein the method further comprises:
sending first indication information to the terminal device and/or the application server, wherein the first indication information indicates the at least one split point.

7. The method according to claim 6, wherein the first indication information is carried in an edge resource control protocol layer message; or
the first indication information is carried in a radio resource control message; or
the first indication information is carried in media access control control element signaling; or
the first indication information is carried in non-access stratum signaling.

8. The method according to any one of claims 1 to 7, wherein the artificial intelligence model attribute information further comprises exit point information; the exit point information indicates at least one of the following: a transmission rate needed at each of a plurality of exit points of the artificial intelligence model, channel state information needed at each of the plurality of exit points, or power consumption needed at each of the plurality of exit points; and the method further comprises:
determining at least one exit point from the plurality of exit points based on the network state information, the first power consumption information, and the exit point information.

9. The method according to claim 8, wherein each of the at least one exit point meets at least one of the following:
a transmission rate needed at the exit point is less than or equal to the first transmission rate;
channel state information needed at the exit point is less than or equal to the first channel state information; or
power consumption needed at the exit point is less than or equal to power consumption of executing a model located before the exit point in the artificial intelligence model.

10. The method according to claim 8 or 9, wherein the exit point information further indicates at least one of the following: confidence of an output result at each of the plurality of exit points, accuracy of an output result at each of the plurality of exit points, or a latency needed at each of the plurality of exit points, wherein
each of the at least one exit point further meets at least one of the following:
confidence of an output result at the exit point is greater than or equal to second confidence;
accuracy of an output result at the exit point is greater than or equal to second accuracy; or
a computing latency needed at the exit point is less than or equal to a second latency.

11. The method according to claim 10, wherein the method further comprises:
obtaining first computing power information of the terminal device and second computing power information of an application server, wherein the first computing power information indicates a computing processing speed of the terminal device, and the second computing power information indicates a computing processing speed of the application server; and
determining the second latency based on the network state information, the first computing power information, and the second computing power information.

12. The method according to claim 10 or 11, wherein the method further comprises:
obtaining second confidence information and/or second accuracy information, wherein the second confidence information indicates the second confidence, and the second accuracy information indicates the second accuracy.

13. The method according to any one of claims 8 to 12, wherein the method further comprises:
sending second indication information to the terminal device and/or the application server, wherein the second indication information indicates the at least one exit point.

14. A method for determining a split point, wherein the method is applied to a terminal device or a module in the terminal device, and comprises:
receiving first indication information from a network device, wherein the first indication information indicates at least one split point of an artificial intelligence model, the at least one split point is determined from a plurality of split points based on network state information, first power consumption information, and artificial intelligence model attribute information, the network state information indicates at least one of a first transmission rate and first channel state information, the artificial intelligence model attribute information indicates a plurality of split points of the artificial intelligence model, a transmission rate needed at each of the plurality of split points, and power consumption needed at each of the plurality of split points, and the first power consumption information indicates power consumption of executing each layer of the artificial intelligence model by the terminal device;
executing a first part of model of the artificial intelligence model to obtain a first model output result of the first part of model, wherein the first part of model is a part located before a first split point in the artificial intelligence model, and the first split point is one of the at least one split point;
sending a first data packet to an application server, wherein the first data packet comprises the first model output result and third indication information, and the third indication information indicates the first split point; and
receiving a first inference result from the application server, wherein the first inference result is determined by executing the artificial intelligence model based on the first model output result and the first split point.

15. A method for determining a split point, wherein the method is applied to an application server or a module in the application server, and comprises:
receiving a first data packet from a terminal device, wherein the first data packet comprises a first model output result and third indication information, and the third indication information indicates a first split point;
executing a second part of model of an artificial intelligence model based on the first split point to obtain a first inference result, wherein a first model output result is used as input data of the second part of model, and the second part of model is a part located after the first split point in the artificial intelligence model; and
sending the first inference result to the terminal device.

16. A communication apparatus, comprising:
a communication unit, configured to obtain network state information, first power consumption information of a terminal device, and artificial intelligence model attribute information, wherein the network state information indicates at least one of a first transmission rate and first channel state information, and the artificial intelligence model attribute information indicates a plurality of split points of an artificial intelligence model, a transmission rate needed at each of the plurality of split points, and power consumption needed at each of the plurality of split points, and the first power consumption information indicates computing power consumption needed by the terminal device to execute the artificial intelligence model to a model that is before each of the plurality of split points; and
a processing unit, configured to determine at least one split point from the plurality of split points based on the network state information, the first power consumption information, and the artificial intelligence model attribute information.

17. The apparatus according to claim 16, wherein each of the at least one split point meets at least one of the following:
a transmission rate needed at the split point is less than or equal to the first transmission rate;
channel state information needed at the split point is less than or equal to the first channel state information; or
power consumption needed at the split point is less than or equal to computing power consumption of executing, by the terminal device, a model located before the split point in the artificial intelligence model.

18. The apparatus according to claim 16 or 17, wherein the artificial intelligence model attribute information further indicates confidence and accuracy of an output result at each of the plurality of split points, and the artificial intelligence model attribute information further indicates a latency needed at each of the plurality of split points, wherein
each of the at least one split point further meets at least one of the following:
confidence of an output result at the split point is greater than or equal to first confidence;
accuracy of an output result at the split point is greater than or equal to first accuracy; or
a computing latency needed at the split point is less than or equal to a first latency.

19. The apparatus according to claim 18, wherein the communication unit is further configured to:
obtain first computing power information of the terminal device and second computing power information of an application server, wherein the first computing power information indicates a computing processing speed of the terminal device, and the second computing power information indicates a computing processing speed of the application server; and
the processing unit is further configured to determine the first latency based on the network state information, the first computing power information, and the second computing power information.

20. The apparatus according to claim 18 or 19, wherein the communication unit is further configured to:
obtain first confidence information and/or first accuracy information, wherein the first confidence information indicates the first confidence, and the first accuracy information indicates the first accuracy.

21. The apparatus according to any one of claims 16 to 20, wherein the communication unit is further configured to:
send first indication information to the terminal device and/or the application server, wherein the first indication information indicates the at least one split point.

22. The apparatus according to claim 21, wherein the first indication information is carried in an edge resource control protocol layer message; or
the first indication information is carried in a radio resource control message; or
the first indication information is carried in media access control control element signaling; or
the first indication information is carried in non-access stratum signaling.

23. The apparatus according to any one of claims 16 to 22, wherein the artificial intelligence model attribute information further comprises exit point information; the exit point information indicates at least one of the following: a transmission rate needed at each of a plurality of exit points of the artificial intelligence model, channel state information needed at each of the plurality of exit points, or power consumption needed at each of the plurality of exit points; and the processing unit is further configured to:
determine at least one exit point from the plurality of exit points based on the network state information, the first power consumption information, and the exit point information.

24. The apparatus according to claim 23, wherein each of the at least one exit point meets at least one of the following:
a transmission rate needed at the exit point is less than or equal to the first transmission rate;
channel state information needed at the exit point is less than or equal to the first channel state information; or
power consumption needed at the exit point is less than or equal to power consumption of executing a model located before the exit point in the artificial intelligence model.

25. The apparatus according to claim 23 or 24, wherein the exit point information further indicates at least one of the following: confidence of an output result at each of the plurality of exit points, accuracy of an output result at each of the plurality of exit points, or a latency needed at each of the plurality of exit points, wherein
each of the at least one exit point further meets at least one of the following:
confidence of an output result at the exit point is greater than or equal to second confidence;
accuracy of an output result at the exit point is greater than or equal to second accuracy; or
a computing latency needed at the exit point is less than or equal to a second latency.

26. The apparatus according to claim 25, wherein the communication unit is further configured to:
obtain first computing power information of the terminal device and second computing power information of an application server, wherein the first computing power information indicates a computing processing speed of the terminal device, and the second computing power information indicates a computing processing speed of the application server; and
the processing unit is further configured to determine the second latency based on the network state information, the first computing power information, and the second computing power information.

27. The apparatus according to claim 25 or 26, wherein the communication unit is further configured to:
obtain second confidence information and/or second accuracy information, wherein the second confidence information indicates the second confidence, and the second accuracy information indicates the second accuracy.

28. The apparatus according to any one of claims 23 to 27, wherein the communication unit is further configured to:
send second indication information to the terminal device and/or the application server, wherein the second indication information indicates the at least one exit point.

29. A communication apparatus, comprising:
a communication unit, configured to receive first indication information from a network device, wherein the first indication information indicates at least one split point of an artificial intelligence model, the at least one split point is determined from the plurality of split points based on network state information, first power consumption information, and artificial intelligence model attribute information, the network state information indicates at least one of a first transmission rate and first channel state information, the artificial intelligence model attribute information indicates a plurality of split points of the artificial intelligence model, a transmission rate needed at each of the plurality of split points, and power consumption needed at each of the plurality of split points, and the first power consumption information indicates power consumption of executing each layer of the artificial intelligence model by the terminal device; and
a processing unit, configured to execute a first part of model of the artificial intelligence model to obtain a first model output result of the first part of model, wherein the first part of model is a part located before a first split point in the artificial intelligence model, and the first split point is one of the at least one split point, wherein
the communication unit is configured to: send a first data packet to an application server, wherein the first data packet comprises the first model output result and third indication information, and the third indication information indicates the first split point; and receive a first inference result from the application server, wherein the first inference result is determined by executing the artificial intelligence model based on the first model output result and the first split point.

30. A communication apparatus, comprising:
a communication unit, configured to receive a first data packet from a terminal device, wherein the first data packet comprises a first model output result and third indication information, and the third indication information indicates a first split point; and
a processing unit, configured to execute a second part of model of an artificial intelligence model based on the first split point to obtain a first inference result, wherein a first model output result is used as input data of the second part of model, and the second part of model is a part located after the first split point in the artificial intelligence model, wherein
the communication unit is configured to send the first inference result to the terminal device.

31. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 15 through a logic circuit or by executing instructions.

32. A computer program product, comprising instructions, wherein when the instructions are executed, the method according to any one of claims 1 to 15 is implemented.

33. A chip, wherein the chip is configured to implement the method according to any one of claims 1 to 15.

34. A computer-readable storage medium, wherein the storage medium stores a computer program or instructions, and when the computer program or instructions are executed, the method according to any one of claims 1 to 15 is implemented.
